(19) Europäisches Patentamt / European Patent Office / Office européen des brevets

(11) **EP 3 524 426 B1**

(12) **EUROPEAN PATENT SPECIFICATION**

(45) Date of publication and mention
of the grant of the patent:
**15.06.2022 Bulletin 2022/24**

(21) Application number: **16918247.4**

(22) Date of filing: **04.10.2016**

(51) International Patent Classification (IPC):
**B32B 9/00** (2006.01)    **C09D 5/16** (2006.01)
**C09D 7/63** (2018.01)

(52) Cooperative Patent Classification (CPC):
**B32B 9/00; C09D 5/1687; C09D 5/1693; C09D 7/63**

(86) International application number:
**PCT/JP2016/079403**

(87) International publication number:
**WO 2018/066046 (12.04.2018 Gazette 2018/15)**

(54) **ANTIFOULING STRUCTURE**

ANTIFOULING-STRUKTUR

STRUCTURE ANTISALISSURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.08.2019 Bulletin 2019/33**

(73) Proprietor: **Nissan Motor Co., Ltd.
Yokohama-shi, Kanagawa 221-0023 (JP)**

(72) Inventors:
• **SUGIMOTO, Masanobu
Atsugi-shi
Kanagawa 243-0123 (JP)**
• **TSUKADA, Yoshiko
Atsugi-shi
Kanagawa 243-0123 (JP)**
• **NOGUCHI, Yuuji
Atsugi-shi
Kanagawa 243-0123 (JP)**

• **SHIBUKAWA, Toshiya
Atsugi-shi
Kanagawa 243-0123 (JP)**
• **AKAISHI, Shinichi
Atsugi-shi
Kanagawa 243-0123 (JP)**
• **SAKURAI, Daijirou
Atsugi-shi
Kanagawa 243-0123 (JP)**

(74) Representative: **Hoefer & Partner Patentanwälte
mbB
Pilgersheimer Straße 20
81543 München (DE)**

(56) References cited:
**EP-A- 2 927 290        EP-A1- 3 470 222
WO-A1-2013/005247    WO-A1-2015/145703
WO-A1-2015/155830    JP-A- H04 341 922
JP-A- H07 292 382      JP-A- 2001 048 590
JP-A- 2015 063 061     JP-A- 2015 531 005**

**Description**

TECHNICAL FIELD

The present invention relates to an antifouling structure, and more particularly relates to an antifouling structure in which antifouling liquid has excellent depletion resistance.

BACKGROUND ART

In the prior art, there are some antifouling structures having slick surfaces that have antifouling property.

For example, in Japanese Patent Publication 2014-509959 (Patent Document 1), it is proposed to fix an antifouling material to a substrate having a porous structure, thus forming a water repellent surface upon the surface of the substrate, whereby foreign matters are repelled and adhesion of foreign matters are reduced.

Moreover in Patent Document 1 described above, it is disclosed that, even if the antifouling material upon the substrate surface is lost, the water repellent surface can repair itself by the antifouling material being replenished from the interior of the substrate via a capillary network in the porous structure.

CITATION LIST

Patent Document

Patent Document 1: Japanese Patent Publication No. 2014-509959.

SUMMARY OF INVENTION

Technical Problem

However, in the structure described in Patent Document 1, the water repellent surface is capable of self-repair due to the porous structure of the substrate that retains the antifouling material. Therefore, in case an antifouling material with low kinematic viscosity and excellent antifouling property is employed or in case a choice of the substrate retaining the antifouling material is restricted in order to enhance the transparency or the like, it is difficult to form a water repellent surface with a high durability.

The present invention has been conceived in consideration of this type of problem with the prior art, and object thereof is, even when an antifouling liquid with low kinematic viscosity and high antifouling property is employed, to improve both antifouling property and durability of an antifouling structure by improving depletion resistance, such as volatility resistance and leakage resistance, of the antifouling liquid.

Solution to Problem

As a result of diligent investigation conducted by the present inventors in order to achieve the objective described above, they have arrived at completion of the present invention by finding that the objective described above can be attained by employing a mixture of antifouling liquids of two or more types which are different from each other in the relationship between the molecular weight and the kinematic viscosity, whereby these two or more types of antifouling liquids mutually complement one another.

Specifically, the antifouling structure of the present invention includes an oxide layer, a surface modification layer that modifies the surface of the oxide layer, and an antifouling liquid retained in the surface modification layer.

Moreover, the surface modification layer is a modification layer derived from a silane coupling agent; the antifouling liquid includes a first antifouling liquid satisfying Equation (1) below and a second antifouling liquid satisfying Equation (2) below; and the volume ratio (first antifouling liquid / second antifouling liquid) of the first antifouling liquid to the second antifouling liquid is from 1/2 to 100/1:

$$Y \leq 3X + 2000 \qquad \text{Equation (1)}$$

$$Y > 3X + 2000 \qquad \text{Equation (2)}$$

wherein, in Equations (1) and (2), Y represents the average molecular weight of the antifouling liquid, and X represents a kinematic viscosity (cSt) at 20°C of the antifouling liquid.

Advantageous Effects of Invention

Since, according to the present invention, the mixture of antifouling liquids of two or more types, which are different from each other in the relationship between the molecular weight and the kinematic viscosity, is employed, depletion resistance, such as volatility resistance and leakage resistance, of the antifouling liquid is improved, and thus an antifouling structure with excellent antifouling property and high durability is provided.

BRIEF DESCRIPTION OF DRAWING

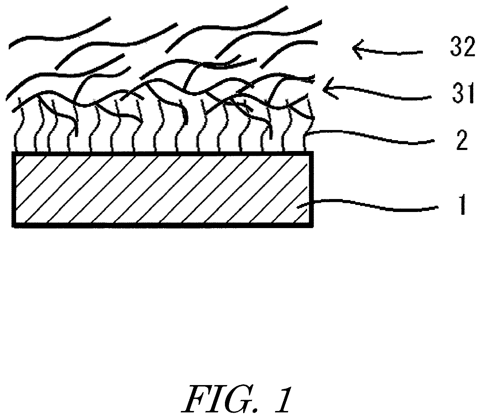

Fig. 1 is a schematic sectional view showing an example of the antifouling structure of the present invention.

DESCRIPTION OF EMBODIMENTS

The antifouling structure of the present invention will now be explained in detail.
The antifouling structure of the present invention comprises an oxide layer, a surface modification layer that modifies the surface of the oxide layer, and an antifouling liquid that is retained in the surface modification layer: the surface modification layer mentioned above has an affinity for the antifouling liquid, and the antifouling liquid includes antifouling liquids of two or more types, which are different from each other in the relationship between the molecular weight and the kinematic viscosity.

Antifouling liquid

The antifouling liquid is adapted to reduce the adherence of foreign matters by forming a smooth water repellent surface upon the surface of the antifouling structure, thus repelling foreign matters, such as water, oil, sand and dust.
An antifouling liquid with low kinematic viscosity can form an antifouling structure with excellent antifouling property and high slipperiness of foreign matters. On the other hand, such antifouling liquid reduces durability of an antifouling structure, because it has in general low molecular weight, and thus it easily suffers from depletion due to volatilization or leakage. Conversely, with an antifouling liquid with high molecular weight, it is possible to improve the durability of the resulting antifouling structure, while an antifouling property of the antifouling structure tends to be reduced due to the high kinematic viscosity.
Accordingly, there is a trade-off relationship between improvement of the antifouling property and improvement of the durability, and thus, it is difficult to provide antifouling structure with both antifouling property and durability.
The antifouling liquid of the present invention includes a first antifouling liquid and a second antifouling liquid. And, because the relationship between the molecular weight and the kinematic viscosity of the first antifouling liquid is different from the relationship between the molecular weight and the kinematic viscosity of the second antifouling liquid, improvement of both the antifouling property and the durability of the antifouling structure is achieved.
The first antifouling liquid satisfies Equation (1) below, and the second antifouling liquid satisfies Equation (2) below:

$$Y \leq 3X + 2000 \qquad \text{Equation (1)}$$

$$Y > 3X + 2000 \qquad \text{Equation (2)}$$

wherein, in Equations (1) and (2), Y is the average molecular weight of the antifouling liquid, and X is a kinematic viscosity (cSt) at 20°C of the antifouling liquid.
The first antifouling liquid consists of molecules having clumped molecular shapes with a great number of large side chains (subsequently this type will sometimes be referred to as a "side chain type"), with which the influence of the molecular weight upon the kinematic viscosity is great, and with which there are a lot of entanglements between the molecules.
Furthermore, the second antifouling liquid consists of molecules having straight molecular shapes or linear molecular shapes with small side chains (subsequently this type will sometimes be referred to as a "straight chain type"), with which the influence of the molecular weight upon the kinematic viscosity is small, and with which there are relatively few entanglements between the molecules.

By employing a mixture of the first antifouling liquid and the second antifouling liquid, it is possible to improve the thermal cycle durability and to realize stable antifouling property.

Although the reason why the thermal cycle durability is improved by mixing together the first antifouling liquid and the second antifouling liquid is not clarified, the following hypothesis has been conceived.

With the antifouling liquid of the antifouling structure of the present invention, as shown in Fig. 1, since the antifouling liquid of the side chain type relatively has a high viscosity and can easily interact with the molecules of the surface modifier, accordingly it can be easily distributed upon the surface modification layer side. On the other hand, since, with the antifouling liquid of the straight chain type, the molecules are less branched, so that its viscosity is relatively low and it has the characteristic of being capable of sliding easily, accordingly it can move freely, and it is considered that it can easily be distributed upon the surface side.

And it is considered that, since the molecules of the antifouling liquid of the side chain type becomes entangled with the molecules of the surface modification layer upon the surface of the oxide layer and with the molecules of the antifouling liquid of the straight chain type, the antifouling liquid of the straight chain type is prevented from flowing out. Moreover, it is considered that, since the surface of the antifouling structure is covered by the antifouling liquid of the straight chain type, which have higher van der Waals forces between the molecules and low volatility, volatilization of the antifouling liquid of the side chain type is suppressed.

It is preferred for the average molecular weight of the first antifouling liquid to be 1500 to 10000, and it is preferred for the average molecular weight of the second antifouling liquid to be 3000 to 5000.

By the average molecular weight of the first antifouling liquid distributed upon the side of the surface modification layer being within the range described above, the leakage resistance can be improved without deterioration of the antifouling property. Moreover, by the average molecular weight of the second antifouling liquid distributed upon the side of the surface of the antifouling structure, which exerts a great influence upon the antifouling property, being within the range described above, along with it being possible to realize excellent antifouling property, also it is possible to suppress depletion of the antifouling liquid due to volatilization.

The average molecular weights of the antifouling liquids may be measured by gel permeation chromatography (GPC).

For the present invention, the average molecular weights were measured under the following conditions.

Device name: Gel permeation chromatograph GPC (type name GPC-22).

Column: PLgel 10 $\mu$m MIXED-B + PLgel 5 $\mu$m MIXED-C.
Column temperature: 23°C.
Mobile phase: AsahiKlin AK-225 (Asahi Glass).
Flow rate: 0.5 ml/min.
Injection amount: 200 $\mu$l.
Standard: Single dispersion polymethylmethacrylate
Detector: Differential refractive index detector RI (RI-8020, manufactured by Tosoh Co.).
Pre-processing: 5 mL of solvent was added to 5 mg of the test specimen, and the mixture was gently stirred at room temperature (dissolving was checked visually).

In the antifouling liquid, it is preferable for the volume ratio of the first antifouling liquid to the second antifouling liquid (first antifouling liquid / second antifouling liquid) to be 1/2 to 100/1, and, depending upon the antifouling liquids used, it is more preferable for this volume ratio to be 1/2 to 20/1, and even more preferable for it to be 1/2 to 4/1.
By keeping within the ranges described above, it is possible to ensure that antifouling property and durability are mutually compatible.

Furthermore, it is preferable for the kinematic viscosity cSt at 20°C of the first antifouling liquid to be 5 to 1500, and it is preferable for the kinematic viscosity cSt at 20°C of the second antifouling liquid to be 10 to 100.

The kinematic viscosity of the antifouling liquid can be ascertained by the following method. First, using gel permeation chromatography (GPC), it is determined whether or not the mixture has some different molecular weight peaks in its molecular weight distribution. Then, for example, the antifouling liquid is separated by making use of the difference of vaporization loss. In concrete terms, the antifouling liquid mixture is separated into the two types of antifouling liquid by applying heat for a long period at around 200°C. Subsequently, the antifouling liquids on each of the distillation side and the residual side are subjected to measurement with a viscometer.

The kinematic viscosities may be measured with a rotational viscometer or with a Cannon-Fenske viscometer.

For the present invention, the shear rate of the rotational viscometer was set so that the torque value became about 50%.

The name of the equipment used and the measurement conditions are given below. Equipment name: BROOKFIELD LVDV-II+Pro CP.

Measurement method: cone/plate type rotational viscosity measurement.

Spindle: CPA-52Z.

Measurement temperature: 20°C.

It is preferable for the kinematic viscosities of the first antifouling liquid and the second antifouling liquid described above to satisfy the relationship of the following Equation (3):

$$X1 > X2 \qquad \text{Equation (3)}$$

wherein, X1 is the kinematic viscosity (cSt) of the first antifouling liquid and X2 is the kinematic viscosity (cSt) of the second antifouling liquid.

Due to the kinematic viscosity of the antifouling liquid of the straight chain type that covers the surface of the antifouling structure, i.e. of the second antifouling liquid, being low, not only are slipperiness of foreign matters and the antifouling property of the antifouling structure improved, but also it is possible to lower the kinematic viscosity of the entire antifouling liquid, so that the impregnation property of the antifouling liquid during manufacture is improved and manufacturing cost can be reduced.

Fluorinated oil are employed for the antifouling liquids; and the first and the second antifouling liquids of the invention include fluoropolyether oil and/or perfluoroether oil

As examples of fluorinated oils that satisfy Equation (1) above, Fomblin Y04, Fomblin Y06, Fomblin Y15, or Fomblin Y25 manufactured by Solvay Co., or Krytox 101 to 105 manufactured by Dupont Co., and the like may be cited.

Moreover, as examples of fluorinated oils that satisfy Equation (2) above, Fomblin M03, Fomblin M07, Fomblin M15, or Fomblin M30 manufactured by Solvay Co. and the like may be cited.

Surface modification layer

Along with increasing the affinity for the antifouling liquid by modifying the surface of an oxide layer that will be described hereinafter, and making it easy to form a smooth water repellent surface by wet-spreading the antifouling liquid over the surface of the oxide layer, the surface modification layer mentioned above also retains the antifouling liquid, and prevents the antifouling liquid from flowing out and being depleted, thus enhancing the durability of the antifouling structure.

A per se known fluorine-based silane coupling agent may be cited as the surface modifier for forming the surface modification layer described above; in concrete terms, a perfluoropolyether containing ethoxysilane or the like may be cited.

The silane coupling agent described above generates silanol (Si-OH) by hydrolysis, and the generated silanols form a siloxane bond by dehydration condensation, resulting in polymerization of the silane coupling agent itself. The polymerized silane coupling agent tends to be entangled with the molecules of the antifouling liquid, especially the molecules of the first antifouling liquid. Then, the silane coupling agent, which undergoes dehydration condensation with the hydroxyl groups upon the surface of the oxide layer and polymerizes, modifies the surface of the oxide layer.

The average molecular weight of the surface modifier comprised in the surface modification layer is preferable 100 to 3000. The leakage resistance is improved by the average molecular weight of the surface modifier being within the range described above.

Oxide layer

The oxide layer is formed from an inorganic oxide, and has a surface including hydroxyl groups. Metal oxides such as ceramic, glass or the like may be cited as examples of such inorganic oxides.

It is preferable for the oxide layer to have a surface including minute unevenness, and further to have micropores in an interior of the oxide layer. Due to the presence of the minute unevenness and/or internal micropores on the surface, it is possible to retain the antifouling liquid within the cavities and/or micropores, and, together with the presence of the surface modification layer, it is possible, along with increasing the amount of the antifouling liquid that is retained, to improve leakage resistance of the antifouling liquid, and thus to improve the durability of the resulting antifouling structure.

For example, simple oxides such as silicon oxide, aluminum oxide hydroxide (Boehmite), aluminum oxide (alumina), magnesium oxide, titanium oxide, cerium oxide, niobium oxide, zirconium oxide, indium oxide, tin oxide, zinc oxide, hafnium oxide or the like, or compound oxides such as zinc antimonate, barium titanate or the like, or glass or the like, may be cited as examples of the metal oxide which is comprised in the oxide layer. It would also be acceptable to employ a mixture of one or two or more types of these metal oxides.

Among these, from the standpoint of their optical transparency being excellent, silicon oxide, aluminum oxide, titanium oxide, indium oxide, tin oxide, and zirconium oxide are preferred.

EXAMPLES

Now, the present invention will be explained in more detail with reference to Examples, but the present invention is not to be considered as being limited to these Examples.

Manufacture of the Oxide Layer Coating Liquid 50 μL of a 20 wt% dispersion liquid (a sol) of ceramic particles, 50 μL of methyl-based alkoxy oligomer and 20 mL of 2-propanol were mixed, and was stirred for one minute using an ultrasound cleaning machine, and thereby a "coating liquid composition 1" was obtained.

Furthermore, 10 μL of aluminum alkoxide and 2-propanol were mixed together and stirred, and thereby a "coating liquid composition 2" was obtained.

The coating liquid composition 1 and the coating liquid composition 2 were mixed together and stirred for one minute using an ultrasound cleaning machine, and thereby an "oxide layer coating liquid " was obtained.

Manufacture of the Oxide Layer

By employing a flow coating method, the oxide layer coating liquid described above was applied to a base material prepared by coating an alumina sol upon a clear layer whose main component was a urethane-based resin, and was dried to form a porous oxide layer having a surface including minute unevenness.

Surface Modification Process

A surface modifier including 0.1 wt% of a modifier (perfluoropolyether; Fluoro surf manufactured by Fluoro Technology Co, FG5020-TH0.1) in a fluorine-based solvent (manufactured by 3M Co., NOVEC 7100) was applied to the oxide layer described above by a flow coating method and was kept in an environment at 45°C and 70% RH for one hour, and thereby the surface of the oxide layer was modified.

Manufacture of Antifouling Structure

A first antifouling liquid and a second antifouling liquid shown in Table 1 below were mixed together as indicated in Table 2 below, 0.25 cc of this mixed antifouling liquid was dripped upon the oxide layer, on which the surface modification layer described above was formed, and was left for five minutes after spreading the antifouling liquid on the surface with BEMCOT of OZU Corporation, whereby the antifouling liquid was impregnated.

Subsequently, the antifouling liquid was wiped off with BEMCOT of OZU Corporation to such an extent that the iridescent unevenness disappeared, and thereby an antifouling structure was obtained.

Evaluation

The antifouling structures described above were evaluated according to sliding angle. Measurements of the initial sliding angle directly after manufacture and the sliding angle after application of heat at 90°C for four hours were performed by dripping 20 μL of pure water onto the antifouling structure, using an automatic contact angle measuring system DSA100.

The results of evaluation are shown in Table 2.

Table 1

|  | Molecular weight | Kinematic viscosity (cSt) (20°C) |
|---|---|---|
| First antifouling liquid |  |  |
| 101 | 1800 | 16 |
| 102 | 2200 | 36 |
| 103 | 2700 | 80 |
| 104 | 3500 | 180 |
| 105 | 5000 | 550 |
| Second antifouling liquid |  |  |
| M03 | 3900 | 30 |
| M07 | 5400 | 66 |

In Table 1, 101 to 105 refer to perfluoroether oils (manufactured by Dupont Co., Krytox 101 to 105), and M03 and M07 refer to perfluoroether oils (manufactured by Solvay Co., Fomblin M03 and M07).

Table 2

|  | First antifouling liquid | Second antifouling liquid | Content ratio (first antifouling liquid / second antifouling liquid) | Initial sliding angle | Sliding angle after heating |
|---|---|---|---|---|---|
| Comparative Example 1 | 101 | M03 | 1/4 | 21.3 | 30.7 |
| Example 1 | 101 | M03 | 1/1 | 8.7 | 10.0 |
| Example 2 | 101 | M03 | 4/1 | 8.17 | 10.3 |
| Comparative Example 2 | 102 | M03 | 1/4 | 18.2 | 33.8 |
| Example 3 | 102 | M03 | 1/1 | 10.5 | 11.2 |
| Example 4 | 102 | M03 | 4/1 | 11.0 | 11.5 |
| Comparative Example 3 | 103 | M03 | 1/4 | 20.7 | 31.5 |
| Example 5 | 103 | M03 | 1/1 | 8.8 | 8.7 |
| Example 6 | 103 | M03 | 4/1 | 6.5 | 7.8 |
| Comparative Example 4 | 104 | M03 | 4/1 | 15.2 | 25.2 |
| Example 7 | 104 | M03 | 1/4 | 8.0 | 8.7 |
| Example 8 | 104 | M03 | 1/1 | 11.3 | 9.7 |
| Comparative Example 5 | 105 | M03 | 1/4 | 28.2 | 41.0 |
| Example 9 | 105 | M03 | 1/1 | 10.0 | 10.5 |
| Example 10 | 105 | M03 | 4/1 | 11.7 | 11.5 |
| Example 11 | 105 | M03 | 19/1 | 11.7 | 11.5 |
| Comparative Example 6 | - | M03 | - | 12.2 | 13.2 |
| Comparative Example 7 | - | M07 | - | 12.0 | 11.3 |
| Comparative Example 8 | - | M03+M07 (1:1) | - | 10.3 | 10.0 |
| Comparative Example 9 | 101 | - | - | 6.8 | 12.7 |
| Comparative Example 10 | 102 | - | - | 7.8 | 12.0 |
| Comparative Example 11 | 103 | - | - | 8.5 | 9.8 |
| Comparative Example 12 | 104 | - | - | 12.0 | 11.7 |
| Comparative Example 13 | 105 | - | - | 13.2 | 11.8 |

From the results shown in Table 2, it will be understood that, in Examples satisfying the condition that the content ratio of the first antifouling liquid to the second antifouling liquid (first antifouling liquid / second antifouling liquid) is 1/2 to 100/1, the initial sliding angles and the sliding angles after the application of heat are smaller than those in Comparative Examples 6 and 7 that employ the first antifouling liquid or the second antifouling liquid alone, and that in the Comparative Example 8 that employs two types of the second antifouling liquids, so that the antifouling property and the durability are excellent.

REFERENCE SIGNS LIST

1: oxide layer
2: surface modification layer
31: first antifouling liquid
32: second antifouling liquid

**Claims**

1. An antifouling structure comprising an oxide layer, a surface modification layer that modifies a surface of the oxide layer, and an antifouling liquid retained in the surface modification layer;

   wherein
   the surface modification layer is a modification layer derived from a silane coupling agent, which is capable of generating silanol, which is Si-OH, by hydrolysis;
   the antifouling liquid includes a first antifouling liquid satisfying Equation (1) below and a second antifouling liquid satisfying Equation (2) below, the first and second antifouling agents including a fluoropolyether oil and/or a perfluoroether oil; and
   a volume ratio (first antifouling liquid / second antifouling liquid) of the first antifouling liquid to the second antifouling liquid is from 1/2 to 100/1:

$$Y \leq 3X + 2000 \qquad \text{Equation (1)}$$

$$Y > 3X + 2000 \qquad \text{Equation (2)}$$

   in which, in Equations (1) and (2), Y represents an average molecular weight of the antifouling liquid, and X represents a kinematic viscosity (cSt) at 20°C of the antifouling liquid.

2. The antifouling structure according to claim 1, wherein an average molecular weight of the second antifouling liquid is 3000 to 5000.

3. The antifouling structure according to claim 1 or 2, wherein an average molecular weight of the first antifouling liquid is 1500 to 10000.

4. The antifouling structure according to any one of claims 1 to 3, wherein a kinematic viscosity $X1$ (cSt) at 20°C of the first antifouling liquid and a kinematic viscosity $X2$ (cSt) at 20°C of the second antifouling liquid satisfy a relationship in Equation (3) below:

$$X1 > X2 \qquad \text{Equation (3)}$$

5. The antifouling structure according to claim 1, wherein an average molecular weight of the first antifouling liquid is 1500 to 10000, wherein a kinematic viscosity in $m^2/s$ at 20°C of the first antifouling liquid is $5.0*10^{-6}$ to $0.0015\ m^2/s$ (5 to 1500 cSt), wherein an average molecular weight of the second antifouling liquid is 3000 to 5000 and wherein a kinematic viscosity $m^2/s$ at 20°C of the second antifouling liquid is $1.0*10^{-5}$ to $1.0*10^{-4}$ (10 to 100 cSt).

6. The antifouling structure according to any one of claims 1 to 5, wherein the oxide layer has a surface including unevenness.

7. The antifouling structure according to any one of claims 1 to 6, wherein the average molecular weight of the surface modifier comprised
in the surface modification layer is 100 to 3000.

**Patentansprüche**

1. Antifouling-Struktur, die eine Oxidschicht, eine Oberflächenmodifikationsschicht, die eine Oberfläche der Oxidschicht modifiziert, und eine Antifouling-Flüssigkeit aufweist, die in der Oberflächenmodifikationsschicht zurückgehalten ist;

wobei
die Oberflächenmodifikationsschicht eine Modifikationsschicht ist, die von einem Silankupplungsmittel abgeleitet ist, das in der Lage ist, Silanol, das Si-OH ist, durch Hydrolyse zu erzeugen;
die Antifouling-Flüssigkeit eine erste Antifouling-Flüssigkeit, die die nachstehende Gleichung (1) erfüllt, und eine zweite Antifouling-Flüssigkeit, die die nachstehende Gleichung (2) erfüllt, aufweist, wobei das erste und das zweite Antifouling-Mittel ein Fluorpolyetheröl und/oder ein Perfluoretheröl umfassen; und
ein Volumenverhältnis (erste Antifouling-Flüssigkeit/zweite Antifouling-Flüssigkeit) der ersten Antifouling-Flüssigkeit zur zweiten Antifouling-Flüssigkeit von 1/2 bis 100/1 beträgt:

$$Y \leq 3X + 2000 \qquad \text{Gleichung (1)}$$

$$Y > 3X + 2000 \qquad \text{Gleichung (2)}$$

wobei in den Gleichungen (1) und (2) Y ein durchschnittliches Molekulargewicht der Antifouling-Flüssigkeit darstellt, und X eine kinematische Viskosität (cSt) bei 20°C der Antifouling-Flüssigkeit darstellt.

2. Antifouling-Struktur nach Anspruch 1, wobei ein durchschnittliches Molekulargewicht der zweiten Antifouling-Flüssigkeit 3000 bis 5000 beträgt.

3. Antifouling-Struktur nach Anspruch 1 oder 2, wobei ein durchschnittliches Molekulargewicht der ersten Antifouling-Flüssigkeit 1500 bis 10000 beträgt.

4. Antifouling-Struktur nach einem der Ansprüche 1 bis 3, wobei eine kinematische Viskosität X1 (cSt) bei 20°C der ersten Antifouling-Flüssigkeit und eine kinematische Viskosität X2 (cSt) bei 20°C der zweiten Antifouling-Flüssigkeit eine Beziehung in Gleichung (3) unten erfüllen:

$$X1 > X2 \qquad \text{Gleichung (3)}$$

5. Antifouling-Struktur nach Anspruch 1, wobei ein durchschnittliches Molekulargewicht der ersten Antifouling-Flüssigkeit 1500 bis 10000 beträgt, wobei eine kinematische Viskosität in $m^2/s$ bei 20°C der ersten Antifouling-Flüssigkeit $5{,}0 \times 10^{-6}$ bis $0{,}0015$ $m^2/s$ (5 bis 1500 cSt) beträgt, wobei ein durchschnittliches Molekulargewicht der zweiten Antifouling-Flüssigkeit 3000 bis 5000 beträgt und wobei eine kinematische Viskosität $m^2/s$ bei 20°C der zweiten Antifouling-Flüssigkeit $1{,}0 \times 10^{-5}$ bis $1{,}0 \times 10^{-4}$ (10 bis 100 cSt) beträgt.

6. Antifouling-Struktur nach einem der Ansprüche 1 bis 5, wobei die Oxidschicht eine Oberfläche mit Unebenheiten hat.

7. Antifouling-Struktur nach einem der Ansprüche 1 bis 6, wobei das durchschnittliche Molekulargewicht des Oberflächenmodifikationsmittels, das in der Oberflächenmodifikationsschicht enthalten ist, 100 bis 3000 beträgt.

**Revendications**

1. Structure antisalissure comprenant une couche d'oxyde, une couche de modification de surface qui modifie une surface de la couche d'oxyde, et un liquide antisalissure retenu dans la couche de modification de surface ;

   dans laquelle
   la couche de modification de surface est une couche de modification dérivée d'un agent de couplage au silane, qui est capable de générer du silanol, qui est Si-OH, par hydrolyse ;
   le liquide antisalissure comprend un premier liquide antisalissure satisfaisant l'Équation (1) ci-dessous et un deuxième liquide antisalissure satisfaisant l'Équation (2) ci-dessous, les premier et deuxième agents antisalissures comprenant une huile fluoropolyéther et/ou une huile perfluoroéther ;
   et
   un rapport en volume (premier liquide antisalissure/deuxième liquide antisalissure) du premier liquide antisalissure sur le deuxième liquide antisalissure est de 1/2 à 100/1 :

$$Y \leq 3X + 2000 \qquad \text{Équation (1)}$$

$$Y > 3X + 2000 \qquad \text{Équation (2)}$$

   où, dans les Équations (1) et (2), Y représente un poids moléculaire moyen du liquide antisalissure, et X représente une viscosité cinématique (cSt) à 20°C du liquide antisalissure.

2. Structure antisalissure selon la revendication 1, dans laquelle un poids moléculaire moyen du deuxième liquide antisalissure est de 3000 à 5000.

3. Structure antisalissure selon la revendication 1 ou 2, dans laquelle un poids moléculaire moyen du premier liquide antisalissure est de 1500 à 10000.

4. Structure antisalissure selon l'une quelconque des revendications 1 à 3, dans laquelle une viscosité cinématique X1 (cSt) à 20°C du premier liquide antisalissure et une viscosité cinématique X2 (cSt) à 20°C du deuxième liquide antisalissure satisfont une relation dans l'Équation (3) ci-dessous :

$$X1 > X2 \qquad \text{Équation (3)}$$

5. Structure antisalissure selon la revendication 1, dans laquelle un poids moléculaire moyen du premier liquide antisalissure est de 1500 à 10000, dans laquelle une viscosité cinématique en $m^2/s$ à 20°C du premier liquide antisalissure est de $5,0*10^{-6}$ à $0,0015\ m^2/s$ (5 à 1500 cSt), dans laquelle un poids moléculaire moyen du deuxième liquide antisalissure est de 3000 à 5000 et dans laquelle une viscosité cinématique $m2/s$ à 20°C du deuxième liquide antisalissure est de $1,0*10^{-5}$ à $1,0*10^{-4}$ (10 à 100 cSt).

6. Structure antisalissure selon l'une quelconque des revendications 1 à 5, dans laquelle la couche d'oxyde a une surface comprenant des irrégularités.

7. Structure antisalissure selon l'une quelconque des revendications 1 à 6, dans laquelle le poids moléculaire moyen du modificateur de surface compris dans la couche de modification de surface est de 100 à 3000.

*FIG. 1*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014509959 A